(19) Europäisches Patentamt
European Patent Office
Office européen des brevets

(11) **EP 2 128 820 A1**

(12) **EUROPEAN PATENT APPLICATION**
published in accordance with Art. 153(4) EPC

(43) Date of publication:
**02.12.2009 Bulletin 2009/49**

(51) Int Cl.:
*G06T 7/00* (2006.01)     *G06T 1/00* (2006.01)

(21) Application number: **08721128.0**

(22) Date of filing: **25.02.2008**

(86) International application number:
**PCT/JP2008/053708**

(87) International publication number:
**WO 2008/105545 (04.09.2008 Gazette 2008/36)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.02.2007 JP 2007046090**

(71) Applicant: **Sony Corporation
Tokyo 108-0075 (JP)**

(72) Inventors:
• **MOHAMMAD, Abdul Muquit
Tokyo 108-0075 (JP)**
• **ABE, Hiroshi
Tokyo 108-0075 (JP)**

(74) Representative: **Horner, David Richard et al
D Young & Co
120 Holborn
London EC1N 2DY (GB)**

(54) **INFORMATION EXTRACTING METHOD, REGISTERING DEVICE, COLLATING DEVICE AND PROGRAM**

(57)     To propose an information extracting method, a registration device, a verification device, and a program for improving the authentication accuracy while suppressing the amount of information of an identification target. From a plurality of images having viewpoints in a biological body portion environment, common portions of the silhouette of a biological body portion shown in the images are generated as a stereogram in a target space, and values representing shapes of a plurality of cross-sections of the stereogram, the plurality of cross-sections each having a predetermined positional relationship with a reference position of the stereogram, are extracted as identification information. The stereogram can be represented in a discrete manner since the identification data is extracted as data representing cross-sections each having a certain relationship with a reference position in an outer shape of the stereogram as well as cross-sections of portions of the stereogram of the biological body portion.

FIG. 13

EP 2 128 820 A1

**Description**

Technical Field

The present invention relates to an information extracting method, a registration device, a verification device, and a program, which are suitable to be applied to, for example, biometrics authentication.

Background Art

Biometrics authentication refers to methods for identifying a person using a biological body identification target. One biological body identification target is blood vessels of a finger.

For example, an authentication device that generates a three-dimensional image by combining images of different sides of a fingertip and uses this as an identification target has been proposed (e.g., see Patent Document 1).

Patent Document 1: Japanese Unexamined Patent Application Publication No. 2002-175529

In this authentication device, since a three-dimensional image having a significantly larger amount of information than a two-dimensional image serves as an identification target, there is an advantage that the accuracy of identifying a specific person (person), that is, the authentication accuracy, is improved.

In contrast, in this authentication device, there are problems that the amount of memory occupied for storing a three-dimensional image as a registration target is increased, and the load in a verification process is increased. Solving these problems is particularly important when this authentication method is applied to mobile terminal devices, such as PDAs (Personal Digital Assistants) and cellular phones.

Disclosure of Invention

The present invention is made in view of the foregoing points and is to propose an information extracting method, a registration device, a verification device, and a program that can improve the authentication accuracy while suppressing the amount of information of an identification target.

In order to solve the foregoing problems, the present invention resides in an information extracting method including a first step of generating, from a plurality of images having viewpoints in a biological body portion environment, common portions of a silhouette of a biological body portion shown in the images as a stereogram in a target space; and a second step of extracting, as identification information, values representing shapes of a plurality of cross-sections of the stereogram, the plurality of cross-sections each having a predetermined positional relationship with a reference position of the stereogram.

Also, the present invention resides in a registration device including generation means for generating, from a plurality of images having viewpoints in a biological body portion environment, common portions of a silhouette of a biological body portion shown in the images as a stereogram in a target space; extraction means for extracting a value representing a shape of a cross-section of the stereogram, the cross-section having a predetermined positional relationship with a reference position of the stereogram; and registration means for registering the value as identification information in a storage medium.

Furthermore, the present invention resides in a verification device including generation means for generating, from a plurality of images having viewpoints in a biological body portion environment, common portions of a silhouette of a biological body portion shown in the images as a stereogram in a target space; extraction means for extracting a value representing a shape of a cross-section of the stereogram, the cross-section having a predetermined positional relationship with a reference position of the stereogram; and verification means for verifying the value against a value registered as identification information in a storage medium.

Furthermore, the present invention resides in a program causing a control unit, the control unit controlling a work memory, to execute generating, from a plurality of images having viewpoints in a biological body portion environment, common portions of a silhouette of a biological body portion shown in the images as a stereogram in a target space; and extracting a value representing a shape of a cross-section of the stereogram, the cross-section having a predetermined positional relationship with a reference position of the stereogram.

According to the present invention, an information extracting method, a registration device, a verification device, and a program that can represent a stereogram of a biological body portion in a discrete manner since identification data is extracted as data representing cross-sections each having a certain relationship with a reference position in an outer shape of the stereogram as well as cross-sections of portions of the stereogram, and, as a result, compared with the case where the stereogram simply serves as identification information, improve the authentication accuracy while suppressing the amount of information of an identification target are realized.

Brief Description of Drawings

Fig. 1 is a block diagram illustrating the structure of an authentication device according to a present embodiment.
Fig. 2 is a schematic diagram illustrating a transition of the state of a rotating finger.
Fig. 3 is a schematic diagram illustrating the relationship between an image pickup target and images.
Fig. 4 is a block diagram illustrating a functional structure of a control unit.
Fig. 5 includes schematic diagrams provided to describe detection of a finger joint.
Fig. 6 is a schematic diagram provided to describe calculation of a rotation correction amount.
Fig. 7 includes schematic diagrams provided to describe calculation of a movement amount.
Fig. 8. is a schematic diagram illustrating a voxel space.
Fig. 9 is a schematic diagram provided to describe detection of a silhouette area of a finger.
Fig. 10 is a schematic diagram provided to describe an arrangement relationship among individual images arranged in a voxel space environment.
Fig. 11 is a schematic diagram illustrating a finger stereogram.
Fig. 12 is a schematic diagram illustrating a finger stereogram generated in a voxel space.
Fig. 13 is a schematic diagram provided to describe determination of cross-sections with reference to a joint.
Fig. 14 is a schematic diagram provided to describe extraction of cross-section shape values.

Best Mode for Carrying Out the Invention

Hereinafter, an embodiment to which the present invention is applied will be described in detail with reference to the drawings.

(1) Overall Structure of Authentication Device according to Present Embodiment

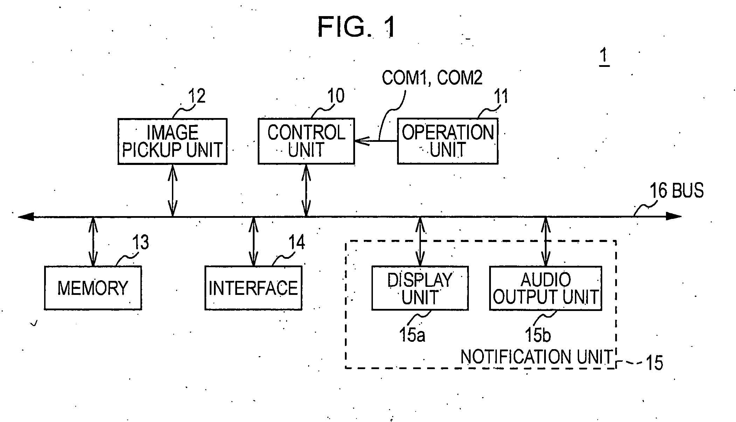

In Fig. 1, an overall structure of an authentication device 1 according to the present embodiment is illustrated. The authentication device 1 is configured by connecting each of an operation unit 11, an image pickup unit 12, a memory 13, an interface 14, and a notification unit 15 to a control unit 10 via a bus 16.

The control unit 10 is configured as a computer including a CPU (Central Processing Unit) that is in charge of control of the overall authentication device 1, a ROM (Read Only Memory) in which various programs, setting information, and the like are stored, and a RAM (Random Access Memory) serving as a work memory for the CPU.

To the control unit 10, an execution command COM1 for a mode in which a finger of a user to be registered (hereinafter this will be called a registrant) is to be registered (hereinafter this will be called a finger registration mode) or an execution command COM2 for a mode in which the presence of a registrant himself/herself is determined (hereinafter this will be called an authentication mode) is input from the operation unit 11 in accordance with a user operation.

The control unit 10 is configured to determine, on the basis of the execution command COM1 or COM2, a mode to be executed, and, on the basis of a program correlated with this determination result, appropriately control the image pickup unit 12, the memory 13, the interface 14, and the notification unit 15, thereby executing the finger registration mode or the authentication mode.

On the basis of an exposure value (EV) specified by the control unit 10, the image pickup unit 12 adjusts the position of a lens in an optical system, an aperture value of an iris, and a shutter speed (exposure time) of an image pickup element.

Also, the image pickup unit 12 captures an image of a photographic subject shown on an image pickup face of the image pickup element every predetermined period, and sequentially outputs data regarding an image generated as the image pickup result (hereinafter this will be called image data) to the control unit 10.

The memory 13 is implemented by, for example, a flash memory, and the memory 13 is configured so that data specified by the control unit 10 is stored in the memory 13 or read from the memory 13.

The interface 14 is configured to exchange various items of data with an external device connected thereto via a predetermined transmission line.

The notification unit 15 is implemented by a display unit 15a and an audio output unit 15b. The display unit 15a displays, on a display screen, characters and graphics based on display data supplied from the control unit 10. In contrast, the audio output unit 15b is configured to output, from a loudspeaker, sound based on audio data supplied from the control unit 10.

(2) Finger Registration Mode

Next, the finger registration mode will be described. When the control unit 10 determines the finger registration mode as a mode to be executed, the control unit 10 causes the notification unit 15 to give notifications of the need to change an operation mode to the finger registration mode, to place a finger in an image pickup space, and to rotate the finger along a finger circumference face (the faces of the finger pad, finger side, and finger dorsum). At the same time, the control unit 10 causes the image pickup unit 12 to perform an image pickup operation.

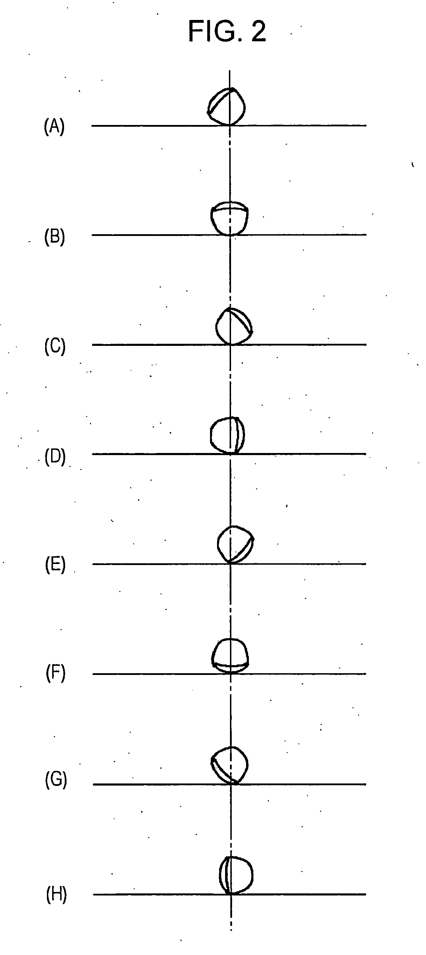

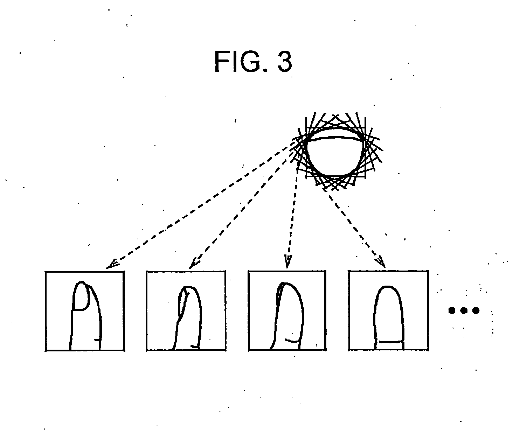

In this state, for example, as illustrated in Fig. 2, when a finger placed in the image pickup space is rotated along the finger circumference face, for example; as illustrated in Fig. 3, the image pickup unit 12 uses visible light as image pickup light and sequentially obtains images of the finger surface (hereinafter these will be called finger images).

Also, the control unit 10 generates, on the basis of items of image data sequentially input from the image pickup unit 12 in the image capturing order, a stereogram of the finger (hereinafter this will be called a finger stereogram), and extracts values representing the shapes of cross-sections of the finger stereogram (hereinafter these will be called cross-section shape values). The control unit 10 stores these cross-section shape values as data of an identification target (hereinafter this will be called identification data) in the memory 13, thereby registering the finger.

In this manner, the control unit 10 is configured to execute the finger registration mode.

(3) Authentication Mode

Next, the authentication mode will be described. When the control unit 10 determines the authentication mode as a mode to be executed, the control unit 10 causes the notification unit 15 to give notifications of the need to change the operation mode to the authentication mode, and, as in the case of the finger registration mode, to rotate a finger along the finger circumference face in the image pickup space. At the same time, the control unit 10 causes the image pickup unit 12 to perform an image pickup operation.

Also, the control unit 10 extracts, as in the finger registration mode, on the basis of items of image data input from the image pickup unit 12 in the image capturing order, cross-section shape values of the finger stereogram. The control unit 10 verifies the extracted cross-section shape valuers against cross-section shape values stored as identification data in the memory 13. From the verification result, it is determined whether or not the finger's owner can be approved as a registrant.

Here, when it is determined that the finger's owner cannot be approved as a registrant, the control unit 10 gives a visual and aural notification indicating the disapproval via the display unit 15a and the audio output unit 15b. In contrast, when it is determined that the finger's owner can be approved as a registrant, the control unit 10 sends data representing that the finger's owner is approved as a registrant to a device connected to the interface 14. This device is triggered by the data representing that the finger's owner is approved as a registrant and performs, for example, a predetermined process to be executed at the time the authentication is successful, such as closing a door for a certain period or cancelling a restricted operation mode.

In this manner, the control unit 10 is configured to execute the authentication mode.

(4) Cross-Section Shape Value Extracting Process

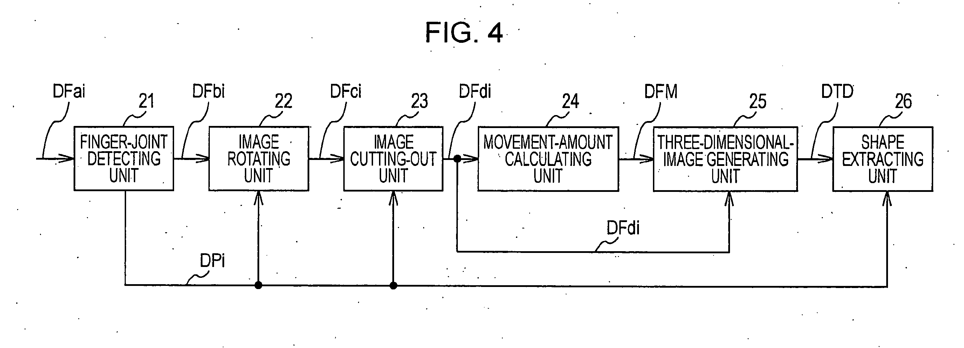

Next, a cross-section shape value extracting process performed by the control unit 10 will be described. This process can be functionally divided into, as illustrated in Fig. 4, a finger-joint detecting unit 21, an image rotating unit 22, an image cutting-out unit 23, a movement-amount calculating unit 24, a three-dimensional-image generating unit 25, and a shape extracting unit 26. Hereinafter, the finger-joint detecting unit 21, the image rotating unit 22, the image cutting-out unit 23, the movement-amount calculating unit 24, the three-dimensional-image generating unit 25, and the shape extracting unit 26 will be described in detail.

(4-1) Detection of Finger Joint

From the image pickup unit 12, after being subjected to a process of appropriately decimating image data, data regarding a finger image (hereinafter this will be called finger image data) $DFa_i$ ($i = 1, 2, 3, ...,$ or $n$ ($n$ is an integer)) is input to the finger-joint detecting unit 21.

When the finger-joint detecting unit 21 obtains finger image data $DFa_i$, the finger-joint detecting unit 21 detects a joint in a finger image based on the finger image data $DFa_i$. Also, when the finger-joint detecting unit 21 detects a joint, the finger-joint detecting unit 21 supplies position data $DP_i$ representing the position of the joint to the image rotating unit 22, the image cutting-out unit 23, and the shape extracting unit 26, and, additionally supplies data regarding a finger image from which a finger region is extracted (finger image data) $DFb_i$ (which is obtained in a process of detecting this joint) to the image rotating unit 22.

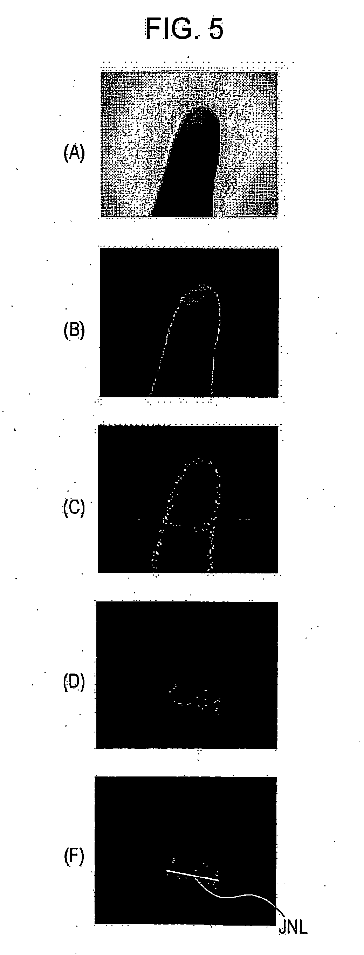

An example of a detection process performed by the finger-joint detecting unit 21 will be described. When the finger-joint detecting unit 21 obtains finger image data $DFa_i$, for example, as illustrated in Fig. 5, the finger-joint detecting unit 21 extracts, on the basis of the contrast of the finger image (Fig. 5(A)), a finger region from the finger image (Fig. 5(B)).

Next, the finger-joint detecting unit 21 extracts, from this finger region, points constituting a finger contour (hereinafter these will be called finger contour points) using a contour extracting filter (Fig. 5(C)); and extracts, from the finger contour points, finger contour points corresponding to a horizontal direction by extending them using a Hough transform or the like (Fig. 5(D)).

The finger-joint detecting unit 21 is configured to detect a line segment passing through a substantial center of the individual extended finger contour as a joint JNL (Fig. 5(E)).

(4-2) Rotation Correction of Image

When the image rotating unit 22 obtains finger image data $DFb_i$, the image rotating unit 22 recognizes the position of a joint from position data $DP_i$ correlated with the finger image data $DFb_i$, and performs rotation correction on the finger image with reference to the position of the joint. The image rotating unit 22 supplies data regarding the rotation-corrected finger image (finger image data) $DFc_i$ to the image cutting-out unit 23.

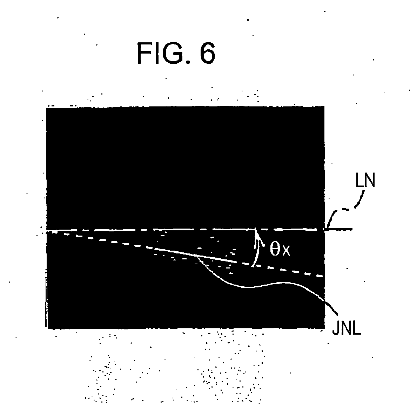

An example of a rotation process performed by the image rotating unit 22 will be described. The image rotating unit 22 obtains, for example, as illustrated in Fig. 6, an angle θx defined by a joint JNL with respect to a line LN in an image column direction as a rotation correction amount of a finger image.

As a result, in this example, a finger image at each viewpoint is subjected to rotation correction so that the longitudinal direction of a finger shown in the image will be an image row direction. Note that, although the case in which rotation correction is performed so that the angle defined by the image column direction and the extending direction of the joint JNL will be 0 [°] has been described in this example, it is only necessary that an angle defined by the image row or column direction and the joint extending direction be a predetermined angle.

(4-3) Cutting Out of Image

When the image cutting-out unit 23 obtains finger image data $DFc_i$, the image cutting-out unit 23 recognizes the position of a joint from position data $DP_i$ correlated with the finger image data $DFb_i$, and cuts out a region of a predetermined size from the finger image with reference to the position of the joint. The image cutting-out unit 23 supplies data regarding an image in the cut-out region (hereinafter this will be called finger image partial data) $DFd_i$ to the movement-amount calculating unit 24 and the three-dimensional-image generating unit 25.

(4-4) Calculation of Movement Amount

When the movement-amount calculating unit 24 selects finger image partial data $DFd_i$ input from the image cutting-out unit 23 as a processing target, the movement-amount calculating unit 24 calculates a movement amount of a finger shown in a finger image based on the selected finger image partial data $DFd_i$ and a finger image based on finger image partial data $DFd_i$ input immediately before the selected finger image partial data $DFd_i$. When the movement-amount calculating unit 24 has calculated the movement amount, the movement-amount calculating unit 24 supplies data representing the movement amount (hereinafter this will be called movement amount data) $DFM_{1-2}$, $DFM_{2-3}$, $DFM_{3-4}$, ... or $DFM_{(n-1)-n}$ to the three-dimensional-image generating unit 25.

An example of a calculation method performed by the movement-amount calculating unit 24 will be described. In the movement-amount calculating unit 24, a movement amount is calculated from an optical flow. Hereinafter, a finger image selected as a processing target will be called a current image, and a finger image input immediately before this finger image will be called a previous image.

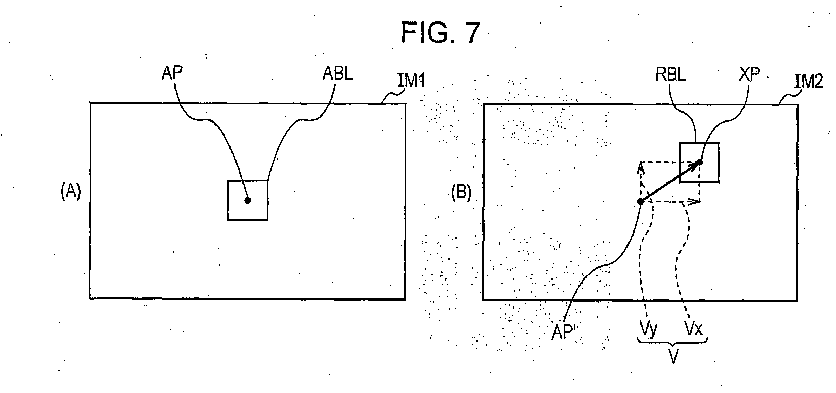

That is, the movement-amount calculating unit 24 determines, for example, as illustrated in Fig. 7(A), a point of a target of interest (hereinafter this will be called a point of interest) AP in a current image IM1, and recognizes a luminance value in a (mxn)-pixel block centered at the point of interest AP (hereinafter this will be called a block of interest) ABL.

The movement-amount calculating unit 24 searches, as illustrated in Fig. 7(B), a previous image IM2 for a block having the minimum luminance value difference with the block of interest ABL, regards the center of a detected block RBL as a point correlated with the point of interest AP (hereinafter this will be called a correlated point) XP, and obtains a position vector $V(V_x, V_y)$ to the correlated point XP with reference to a position AP' corresponding to the point of interest AP.

In this manner, the movement-amount calculating unit 24 is configured to search the previous image IM2 for blocks individually corresponding to a plurality of blocks of interest in the current image IM1, and additionally, to calculate an average of individual position vectors between the centers (XP) of these blocks and the positions (AP') which are the same as the centers of the blocks of interest (the average of horizontal vector components $V_x$ and the average of vertical vector components $V_y$) as a movement amount.

This movement amount is a value that represents not only a horizontal movement (in a rotation direction) with respect to a face on which a finger is placed, but also a vertical movement (in a direction orthogonal to the rotation direction) with respect to the face, which is caused by, for example, fluctuations of a finger pressure amount or the rotation axis.

Note that, as the movement amount, instead of the average of the individual position vectors (the average of horizontal vector components $V_x$ and the average of vertical vector components $V_y$), a value (representative value) that can be obtained from the individual position vectors by using a statistical method, such as the maximum value, the minimum value, or the standard deviation value of the individual position vectors, can be employed.

Also, the plurality of blocks of interest in the current image IM1 generally correspond to all the pixels in the current image IM1. Alternatively, the plurality of blocks of interest in the current image IM1 may correspond to a part of a portion constituting a finger or blood vessels shown in the current image IM1.

Furthermore, the range of the previous image IM2 subjected to a search for a block having the minimum luminance value difference with the block of interest ABL is generally the whole previous image IM2. Alternatively, this range may be a range that is centered at a position displaced by a movement amount detected in the past and that corresponds.to the size of a plurality of blocks of interest. The shape of this range may be changed in accordance with a temporal change amount of the movement amount detected in the past.

(4-5) Generation of Three-Dimensional Image

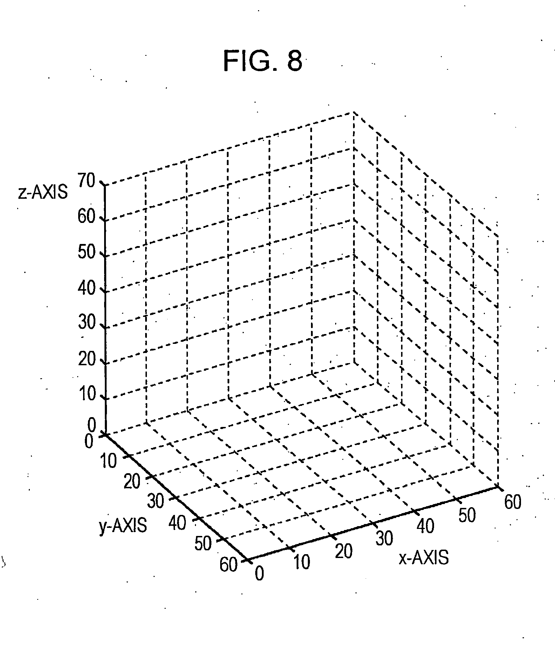

The three-dimensional-image generating unit 25 defines, as illustrated in Fig. 8, a three-dimensional space of a predetermined shape in which a cube called a voxel serves as a constitution unit (hereinafter this will be called a voxel space) as a target space into which projection is performed.

The three-dimensional-image generating unit 25 generates, on the basis of finger image partial data $DFd_1$ to $DFd_n$ input from the image cutting-out unit 23, common portions of the silhouette of the finger shown in the finger images as a finger stereogram (three-dimensional volume) in the voxel space, and supplies data of the finger stereogram (voxel data) as three-dimensional volume data DTD to the shape extracting unit 26.

An example of a finger-stereoscopic-model generating method performed by the three-dimensional-image generating unit 25 will be described. On the basis of camera information such as a focal distance and an image center and information regarding the voxel space, the three-dimensional-image generating unit 25 recognizes viewpoints of individual finger images captured from a finger environment and detects individual silhouette areas projected into the voxel space in the case where the finger shown in the images is projected from these viewpoints into the voxel space.

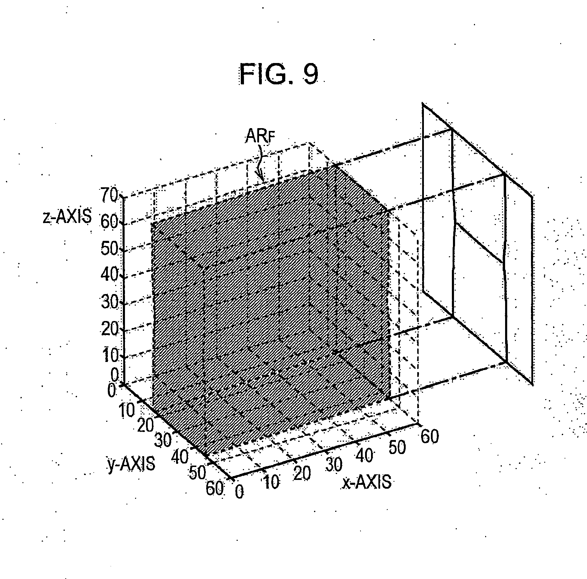

That is, when the three-dimensional-image generating unit 25 regards finger image partial data $DFd_1$ that is first input from the image cutting-out unit 23 as a processing target, the three-dimensional-image generating unit 25 places a finger image based on the finger image partial data $DFd_1$ as a reference image at, for example, as illustrated in Fig. 9, a position correlated with, among viewpoints in a voxel space environment, a viewpoint at a rotation angle 0 [°], and detects a silhouette area $AR_F$ projected from a projection surface of the voxel space to the innermost part thereof.

Specifically, each voxel in the voxel space is reversely projected onto the finger image, and a projection point is calculated. A voxel whose projection point exists within the contour of the finger shown in the finger image is left as a voxel in a silhouette area, thereby detecting the silhouette area.

In contrast, when the three-dimensional-image generating unit 25 regards finger image partial data $DFd_3$, $DFd_5$ ... input from the image cutting-out unit 23 subsequent to the first finger image partial data $DFd_1$ as a processing target, the three-dimensional-image generating unit 25 recognizes a movement amount correlated with the direction of rotation from the reference image to a finger image based on the finger image partial data DFd serving as the processing target (hereinafter this will be called a rotation movement amount) on the basis of correlated movement amount data DFM input from the movement-amount calculating unit 24.

When this rotation movement amount is $V_x$ and a value set as a distance from the rotation axis of the finger to the finger surface is r, the three-dimensional-image generating unit 25 obtains, relative to the reference image, a rotation angle of the finger image serving as the current processing target (hereinafter this will be called a first rotation angle) $\theta_{ro}$ by using the following equation, and determines whether the first rotation angle $\theta_{ro}$ is less than 360 [°].

$$\theta_{ro} = \arctan(V_x/r) \qquad \cdots (1)$$

When the first rotation angle $\theta_{ro}$ is less than 360 [°], this means that not the entirety of a view volume (silhouette area) of a plurality of finger images captured from the entire circumference of the finger has been detected yet. In this case, the three-dimensional-image generating unit 25 obtains a difference between the first rotation angle $\theta_{ro}$ and a rotation angle of a finger image in which the view volume is detected immediately before the current processing target and the reference image (hereinafter this will be called a second rotation angle), and determines whether this difference is greater than or equal to a predetermined threshold.

When this difference is less than the threshold, this means that the rotation of the finger is stopped or almost stopped. In this case, the three-dimensional-image generating unit 25 does not obtain a silhouette area of the finger image serving as the current processing target, and regards finger image partial data DFd input next to this processing target as a processing target. In this way, the three-dimensional-image generating unit 25 can prevent in advance the calculation of a useless silhouette area.

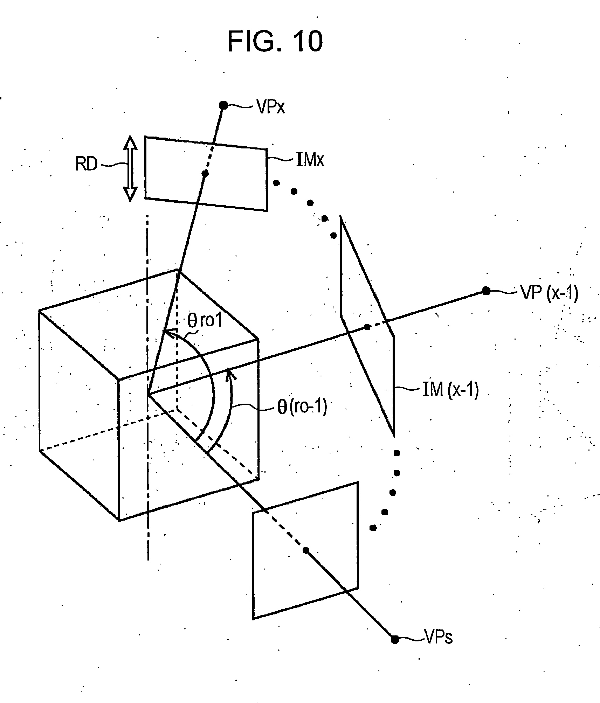

In contrast, when the difference is greater than or equal to the threshold, this means that the finger is currently rotting. In this case, the three-dimensional-image generating unit 25 recognizes, for example, as illustrated in Fig. 10, a viewpoint $VP_X$ that defines the first rotation angle $\theta_{ro}$ relative to a viewpoint $VP_S$ of a reference position $IM_S$, and places a finger image $IM_X$ serving as the current processing target at a position correlated with the viewpoint $VP_X$.

The three-dimensional-image generating unit 25 is configured to detect, for the finger image $IM_X$, a silhouette area projected from the projection surface of the projection space to the innermost part thereof, and then regard finger image partial data DFd input subsequent to the processing target as a processing target.

Note that, when the three-dimensional-image generating unit 25 is to place the finger image $IM_X$ serving as the current processing target in a voxel space environment, the three-dimensional-image generating unit 25 recognizes, for the finger image $IM_X$ and a finger image $IM_{(X-1)}$ in which the view volume has been detected immediately before the finger image $IM_X$, a movement amount in a direction orthogonal to the rotation direction of the finger (the average of vertical vector components $V_y$ of a finger image serving as the current processing target and a finger image placed at last) on the basis of correlated movement amount data DFM (Fig. 4), and performs position correction on the viewpoint $VP_X$ by this movement amount in a correction direction (direction parallel to the z-axis direction of the voxel space) RD.

Accordingly, even when a finger pressure amount or the rotation axis fluctuates at the time the finger is rotated, the three-dimensional-image generating unit 25 can detect a silhouette area while following the fluctuation. Compared with the case where the movement amount in the direction orthogonal to the rotation direction of the finger is not taken into consideration, a silhouette area can be accurately detected.

In this manner, the three-dimensional-image generating unit 25 individually detects silhouette areas of the finger shown in the individual finger images captured from the finger environment, until the first rotation angle $\theta_{ro}$ relative to the reference image becomes 360 [°] or greater.

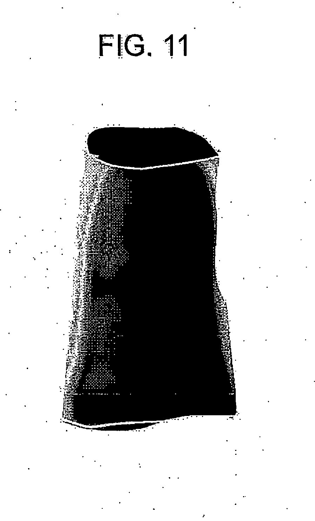

Also, when the first rotation angle $\theta_{ro}$ relative to the reference image becomes 360 [°] or greater, the three-dimensional-image generating unit 25 is configured to extract, from the individual silhouette areas detected so far, common portions as a finger stereogram (three-dimensional volume), thereby generating the finger stereogram, for example, as illustrated in Fig. 11.

(4-6) Recognition of Cross-Section Shape of Stereogram

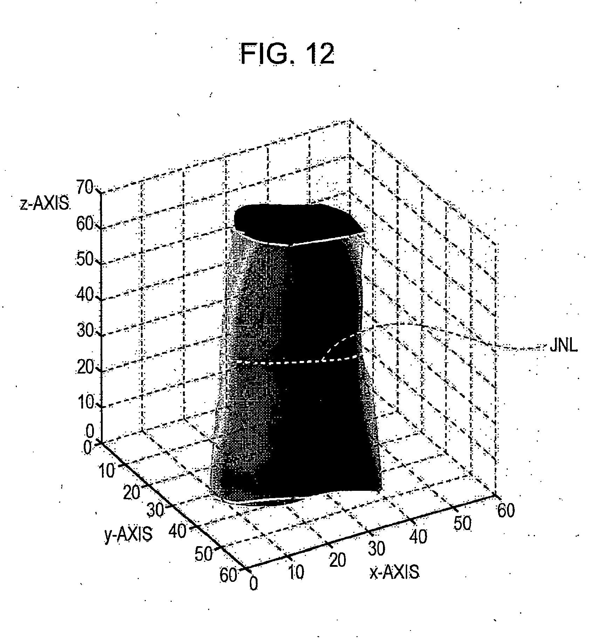

When the shape extracting unit 26 obtains three-dimensional volume data DTD input from the three-dimensional-image generating unit 25, the shape extracting unit 26 recognizes, for example, as illustrated in Fig. 12, a finger stereogram based on the three-dimensional volume data, and additionally, on the basis of position data $DP_i$ input from the finger-joint detecting unit 21, recognizes the position of a joint JNL in the finger stereogram.

With reference to the position of the joint JNL, the shape extracting unit 26 extracts cross-section shape values of a plurality of cross-sections each having a predetermined positional relationship with the joint position, and generates the individual cross-section shape values as identification data DIS. In the case of the finger registration mode, this identification data DIS is registered in the memory 13. In the case of the authentication mode, this identification data DIS is verified against identification data registered in the memory 13.

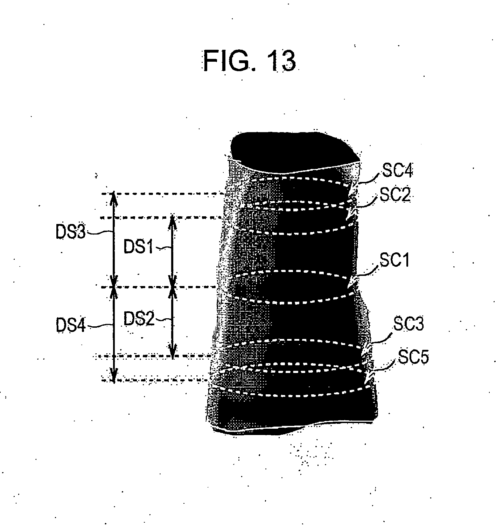

An example of a cross-section-shape-value extracting method performed by the shape extracting unit 26 will be described. The shape extracting unit 26 determines, for example, as illustrated in Fig. 13, a cross-section SC1 that passes through the joint position and is parallel to the joint, cross-sections SC2 and SC3 that pass through positions distant from the joint position by first distances DS1 and DS2 in a direction orthogonal to the joint (longitudinal direction of the finger) and are parallel to the joint, and cross-sections SC4 and SC5 that pass through positions distant from the joint position by second distances DS3 and DS4, which are greater than the first distance, in the longitudinal direction of the finger and are parallel to the joint as targets from which cross-section shape values are to be extracted.

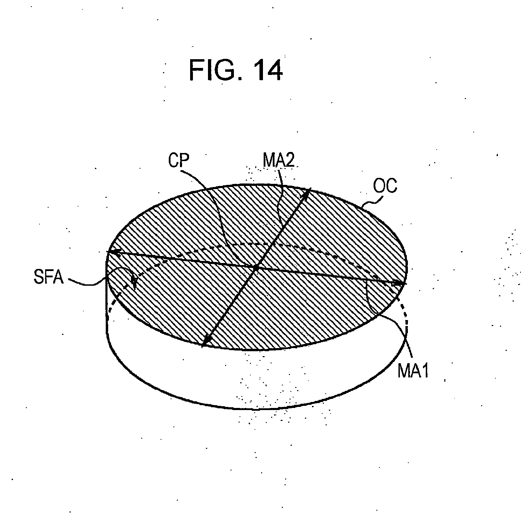

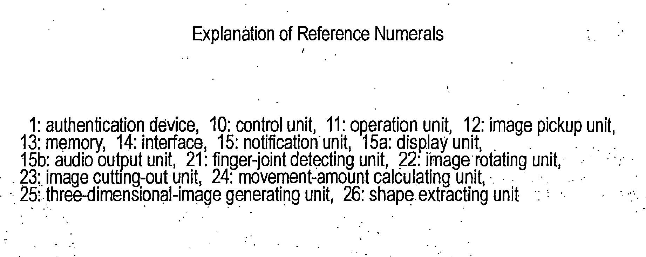

For each of the cross-sections SC1 to SC5, the shape extracting unit 26 is configured to obtain, for example, as illustrated in Fig. 14, the cross-section's outer circumference OC, area SFA, center position CP, and major axis MA1 and minor axis MA2 that pass through the center position CP as cross-section shape values, thereby extracting the cross-section shape values.

(5) Operation and Advantages

In the foregoing structure, the control unit 10 in the authentication device 1 generates, in a target space (Fig. 8), from a plurality of finger images having viewpoints in a biological body portion environment, common portions of the silhouette of a finger shown in these images as a finger stereogram (Fig. 11).

The control unit 10 extracts values (cross-section shape values) representing shapes of cross-sections each having a predetermined positional relationship with the position of a joint JNL (Fig. 12) in the finger stereogram as identification data.

Therefore, the control unit 10 can represent the finger stereogram in a discrete manner since the identification data is extracted as data representing the shape of a portion having a certain relationship with the reference position in the outer shape of the finger stereogram as well as the shape itself of a portion of the finger stereogram. As a result, compared with the case where the finger stereogram simply serves as the identification information, the authentication accuracy can be improved while suppressing the amount of information of an identification target.

In the case of this embodiment, a plurality of cross-section shape values representing the shapes of cross-sections of the finger stereogram (the outer circumference OC, the area SFA, the center position CP, and the major axis MA1 and minor axis MA2 passing through the center position CP) also serve as the identification data.

Furthermore, in the case of this embodiment, regarding the identification data, cross-section shape values individually of five cross-sections SC1 to SC5 (Fig. 13), each having a predetermined positional relationship with the position of the joint JNL (Fig. 12), serve as the identification data.

Thus, the control unit 10 can represent the structure of the finger in a more detailed manner, and the authentication accuracy can be further improved.

Also, before generating a finger stereogram, the control unit 10 detects a joint JNL of a finger shown in finger images and performs rotation correction on the finger images so that an angle defined by the row or column direction of the finger images and the extending direction of the joint JNL becomes a predetermined angle.

Therefore, when generating a finger stereogram, the control unit 10 can accurately obtain common portions of the silhouette of a finger shown in images based on which a finger stereogram is to be generated. As a result, the authentication accuracy can be further improved.

In the case of this embodiment, since the reference for correction rotation is the joint JNL, which is the same as the reference for cross-sections, the processing load until a finger stereogram is generated can be reduced, compared with the case where these references are separate references.

Also, when generating a finger stereogram, the control unit 10 gives an instruction to capture images of a finger circumferential face. For the individual finger images obtained from the image pickup unit 12, the control unit 10 calculates a movement amount of a finger shown in an image selected as a calculation target and in an image input immediately before this image (Fig. 7 and the like).

In this state, the control unit 10 recognizes viewpoints of the individual finger images from the movement amounts and generates, as a finger stereogram (Fig. 11), common portions of projected regions (Fig. 9) projected into a voxel space in the case where the finger or blood vessels shown in the images is/are projected from the viewpoint positions of the images into the voxel space.

Therefore; since the control unit 10 can generate a finger stereogram from images captured using the single image pickup unit 12, the size of the authentication device 1 can be made smaller, compared with the case where a stereogram is generated from images captured using a plurality of cameras. This is useful when the authentication device 1 is to be included in a mobile terminal device, such as a PDA or a cellular phone.

According to the foregoing structure, since values (cross-section shape values) representing the shapes of cross-sections each having a predetermined positional relationship with the position of the joint JNL (Fig. 21) of the finger stereogram are extracted as identification data, the finger stereogram can be represented in a discrete manner. Therefore, the authentication device 1 capable of improving the authentication accuracy while suppressing the amount of information of an identification target can be realized.

(6) Other Embodiments

In the above-described embodiment, the case where values (cross-section shape values) representing the shapes of a plurality of cross-sections SC1 to SC5 (Fig. 13) each having a predetermined positional relationship with the reference position are extracted has been described. In addition to this, the present invention may extract a volume bounded by a pair of cross-sections selected from among the cross-sections and an outer shape of the finger. Note that a pair of cross-sections to be selected may be any pair, such as the cross-sections SC1 and SC5 or the cross-sections SC1 and SC2. Alternatively, two or more pairs of cross-sections may be selected.

Also, the case where each cross section's outer circumference OC, area SFA, center position CP, and major axis MA1 and minor axis MA2 passing through the center position CP are employed as cross-section shape values has been described. However, some of these values may be omitted. For example, new items, such as the length of the finger in the longitudinal direction, may be added.

Note that, at the time of registration or verification, a target to be extracted as a cross-section shape value may be input or selected via the operation unit 11 (Fig. 1), and the input or selected cross-section shape value may be extracted. In this way, details and the number of values to be extracted as cross-section shape values can be incidental security information that is open only to a user. Therefore, the authentication accuracy can be further improved while suppressing the amount of information of an identification target.

Furthermore, when the significance of each of a plurality of cross-section shape values (each cross section's outer circumference OC, area SFA, center position CP, and major axis MA1 and minor axis MA2 passing through the center position CP) is higher, a higher degree of effect exerted on an approval determination of a registrant is to be assigned to the cross-section shape value. In this way, at the time of verification, when only cross-section shape values of high significance match (or do not match), even if cross-section shape values of low significance do not match (or match), the user can be approved as a registrant (cannot be approved as a registrant). Therefore, the authentication accuracy can be further improved while suppressing the amount of information of an identification target.

Also, in the foregoing embodiment, the case where five cross-sections SC1 to SC5 are employed as the number of cross-sections to be subjected to extraction of cross-section shape values has been described. However, the present invention is not limited to this case, and one, two, or more cross-sections may be employed.

Note that, at the time of registration or verification, the number of cross-sections to be extracted may be input or selected via the operation unit 11 (Fig. 1), and cross-section shape values of cross sections in accordance with the input or selected number of cross-sections to be extracted may be extracted. In this way, the number of cross-sections to be extracted can be incidental security information that is open only to a user. Therefore, the authentication accuracy can be further improved while suppressing the amount of information of an identification target.

Also, in the foregoing embodiment, the positional relationships of cross-sections relative to the reference position correspond to the cross-section SC1 which passes through the joint position and is parallel to the joint, the cross-sections SC2 and SC3 which pass through the positions distant from the joint position by the first distances DS1 and DS2 in the direction orthogonal to the joint (longitudinal direction of the finger) and are parallel to the joint, and the cross-sections SC4 and SC5 which pass through the positions distant from the joint position by the second distances DS3 and DS4, which are greater than the first distance, in the longitudinal direction of the finger and are parallel to the joint. However, the present invention is not limited thereto, and other positional relationships may be employed.

For example, all or some of the cross-sections SC1 to SC5 may be changed to cross-sections defining a predetermined angle relative to a face that is parallel to the joint. Also, as the reference position, the position of the joint may be replaced by a finger tip or the like. Also, this reference position is appropriately changed in accordance with the type of images of a biological body portion to be employed. For example, when images of a palm are employed instead of finger images, the life line or the like serves as the reference position.

Note that these positional relationships may be provided as a plurality of patterns, and a cross-section having, relative to the reference position, a positional relationship of a pattern selected from among these patterns may be extracted. In this way, the position of a cross-section to be extracted as a cross-section shape value can be changed in accordance with a selection made by a user, and accordingly, this can be incidental security information that is open only to a user. As a result, the authentication accuracy can be further improved while suppressing the amount of information of an identification target.

In the above-described embodiment, the case where finger images are employed as a plurality of images having viewpoints in a biological body portion environment has been described. However, the present invention is not limited to this case, and images of a palm, a toe, an arm, or an arm may be employed.

Furthermore, in the above-described embodiment, the case where the finger registration mode and the authentication mode are executed on the basis of the program stored on the ROM has been described. However, the present invention is not limited to this case. The finger registration mode and the authentication mode may be executed on the basis of a program installed from a program storage medium, such as a CD (Compact Disc), a DVD, (Digital Versatile Disc), or a semiconductor memory, or a program obtained by downloaded it from a program providing server on the Internet.

Furthermore, in the above-described embodiment, the case where the control unit 10 executes the registration process and the authentication process has been described. However, the present invention is not limited to this case. A portion of these processes may be executed with a graphics workstation.

Furthermore, in the above-described embodiment, the case where the authentication device 1 having an image pickup function, a verification function, and a registration function is employed has been described. However, the present invention is not limited to this case. The present invention may be employed in an embodiment where each function or a portion of each function is separately implemented by a single device in accordance with purposes thereof.

Industrial Applicability

The present invention can be employed in the field of biometrics authentication.

**Claims**

1. An information extracting method **characterized by** comprising:

   a first step of generating, from a plurality of images having viewpoints in a biological body portion environment, common portions of a silhouette of a biological body portion shown in the images as a stereogram in a target space; and
   a second step of extracting, as identification information, values representing shapes of a plurality of cross-sections of the stereogram, the plurality of cross-sections each having a predetermined positional relationship with a reference position in an outer shape of the stereogram.

2. The information extracting method according to claim 1, **characterized in that** the biological body portion is a finger.

3. The information extracting method according to claim 1,
   **characterized in that,** in the second step,
   a plurality of the values are obtained for each of the plurality of cross-sections of the stereogram, the plurality of cross-sections having the predetermined positional relationships with the reference position, and the values are extracted as the identification information.

4. The information extracting method according to claim 1,
   **characterized in that**, in the second step,
   a cross-section of the stereogram, the cross-section having, relative to the reference position, a positional relationship correlated with a pattern selected from among a plurality of patterns of the positional relationships, is extracted.

5. The information extracting method according to claim 1, **characterized by** further comprising:

   a detection step of detecting, in the images, a joint of the biological body portion shown in the images; and
   a rotation correction step of performing rotation correction on the plurality of images so that an angle defined by a row or a column direction of the images and an extending direction of the joint becomes a predetermined angle,
   wherein, in the first step,
   the stereogram is generated from the individual rotation-corrected images.

6. The information extracting method according to claim 3,
   **characterized in that**, in the second step,
   a position correlated with the joint is recognized from the stereogram, and a value representing a shape of a cross-section of the stereogram, the cross-section having a predetermined positional relationship with the position, is extracted as identification information.

7. The information extracting method according to claim 1,
   **characterized by** further comprising a calculation step of calculating a movement amount of the biological body portion shown in an image selected as a calculation target and an image input immediately before the image,
   wherein, in the first step,
   the viewpoints of the plurality of images are recognized from the movement amounts, and, in a case where the biological body portion shown in the images is individually projected from viewpoint positions of the images into the target space, common portions of projected regions projected into the target space are generated as the stereogram.

8. A registration device **characterized by** comprising:

   generation means for generating, from a plurality of images having viewpoints in a biological body portion environment, common portions of a silhouette of a biological body portion shown in the images as a stereogram in a target space;
   extraction means for extracting a value representing a shape of a cross-section of the stereogram, the cross-section having a predetermined positional relationship with a reference position of the stereogram; and registration means for registering the value as identification information in a storage medium.

9. A verification device **characterized by** comprising:

generation means for generating, from a plurality of images having viewpoints in a biological body portion environment, common portions of a silhouette of a biological body portion shown in the images as a stereogram in a target space;
extraction means for extracting a value representing a shape of a cross-section of the stereogram, the cross-section having a predetermined positional relationship with a reference position of the stereogram; and verification means for verifying the value against the value registered as identification information in a storage medium.

10. A program causing a control unit, the control unit controlling a work memory, to execute:

generating, from a plurality of images having viewpoints in a biological body portion environment, common portions of a silhouette of a biological body portion shown in the images as a stereogram in a target space; and extracting a value representing a shape of a cross-section of the stereogram, the cross-section having a predetermined positional relationship with a reference position of the stereogram.

FIG. 1

# FIG. 2

(A)

(B)

(C)

(D)

(E)

(F)

(G)

(H)

# FIG. 3

FIG. 4

EP 2 128 820 A1

# FIG. 5

(A)

(B)

(C)

(D)

(F)

JNL

# FIG. 6

# FIG. 7

FIG. 8

# FIG. 9

# FIG. 10

# FIG. 11

FIG. 12

FIG. 13

FIG. 14

Explanation of Reference Numerals

1: authentication device, 10: control unit, 11: operation unit, 12: image pickup unit,
13: memory, 14: interface, 15: notification unit, 15a: display unit,
15b: audio output unit, 21: finger-joint detecting unit, 22: image rotating unit,
23: image cutting-out unit, 24: movement-amount calculating unit,
25: three-dimensional-image generating unit, 26: shape extracting unit

## INTERNATIONAL SEARCH REPORT

| International application No. |
|---|
| PCT/JP2008/053708 |

A. CLASSIFICATION OF SUBJECT MATTER
*G06T7/00*(2006.01)i, *G06T1/00*(2006.01)i

According to International Patent Classification (IPC) or to both national classification and IPC

B. FIELDS SEARCHED

Minimum documentation searched (classification system followed by classification symbols)
G06T7/00, G06T1/00

Documentation searched other than minimum documentation to the extent that such documents are included in the fields searched
Jitsuyo Shinan Koho        1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2007-219 A  (Hitachi, Ltd.), 11 January, 2007 (11.01.07), Full text; all drawings (Family: none) | 1-10 |
| Y | JP 2003-67726 A  (Sanyo Electric Co., Ltd.), 07 March, 2003 (07.03.03), Full text; all drawings (Family: none) | 1-10 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 April, 2008 (25.04.08) | 13 May, 2008 (13.05.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002175529 A